(19) Europäisches Patentamt / European Patent Office / Office européen des brevets

(11) **EP 3 455 798 B1**

(12) **EUROPEAN PATENT SPECIFICATION**

(45) Date of publication and mention of the grant of the patent:
**15.04.2026 Bulletin 2026/16**

(21) Application number: **17733545.2**

(22) Date of filing: **26.04.2017**

(51) International Patent Classification (IPC):
**G06Q 10/00** *(2026.01)* **G06T 17/00** *(2006.01)*

(52) Cooperative Patent Classification (CPC):
**G06Q 10/20; G06T 7/001; G06T 19/00; G06V 10/751; G06V 20/64;** G06T 2207/30108

(86) International application number:
**PCT/IT2017/000084**

(87) International publication number:
**WO 2017/195228 (16.11.2017 Gazette 2017/46)**

(54) **PROCESS AND SYSTEM TO ANALYZE DEFORMATIONS IN MOTOR VEHICLES**

VERFAHREN UND SYSTEM ZUR ANALYSE VON VERFORMUNGEN BEI KRAFTFAHRZEUGEN

PROCÉDÉ ET SYSTÈME D'ANALYSE DE DÉFORMATIONS DANS DES VÉHICULES À MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2016 IT UA20163231**

(43) Date of publication of application:
**20.03.2019 Bulletin 2019/12**

(73) Proprietor: **Uesse S.R.L.**
**16151 Genova (IT)**

(72) Inventor: **SIRI, Fausto**
**I-16151 Genova (IT)**

(74) Representative: **Garavelli, Paolo**
**A.BRE.MAR. S.R.L.**
**Consulenza in Proprietà Industriale**
**Via Servais 27**
**10146 Torino (IT)**

(56) References cited:
WO-A1-99/39308    US-A1- 2012 076 437
US-A1- 2015 206 023    US-A1- 2015 269 792

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a process and a system to identify, analyze and evaluate deformations, in particular in motor vehicles.

Processes of the above mentioned type are known and widely used. Even is these processes perform their function satisfactorily, they have some problems.

According to prior art processes, when it is necessary to have an evaluation of a damage on a body and/or on structural parts of a motor vehicle, it is necessary to consult an expert in the field, who first performs a visual estimation of the damage, and estimates the parts to be repaired, the parts to be replaced, and with reference to suitable programs, he evaluates necessary times dna costs for repairing the damage.

However, this type of evaluation is rather subjective, namely actually due to the experience of the skilled person in the art, or the skilled person in the art who uses programs. Therefore, this results in the fact that the evaluation of a damage, both related to time and related to cost, is often different between two experts and/or skilled people having different experiences, and therefore some of said taken programs or times, in general provide a range of time values necessary to repair one of said motor vehicle parts, said times could range from a maximum to a minimum and the choice of the final value is assigned to the skilled person in the art depending on his experience.

Another problem of prior art systems is due to the fact that a really accurate evaluation of a damage and the parts affected by the damage is extremely long. De facto, for example in a motor vehicle, it is necessary to estimate the damage depth and whether the damage has affected structural elements of the motor vehicle and in which amount. For example, in case of a damage on a part on the car side, it is necessary to identify not only damaged parts macroscopically, for example doors, but it is also necessary to identify whether the damage has affected internal mechanical parts of doors, or chassis risers, intrusion-preventing bars or other parts. In order to have an accurate balance, it is also necessary to take into account the time to assemble and disassemble the affected parts and/or the apparatuses related thereto in addition to the strictly necessary time to repair/replace the parts.

Due to these reasons, the systems for identifying and evaluating a damage often are not only costly in the prior art, but also inaccurate as regards their result, being often different from the final one, or alternatively there is an inaccuracy in evaluating errors by the expert and/or an operator, since he has to estimate the damage in a non objective way, so that he provides for the replacement of a part which actually would be cheaper to repair instead of replace it.

Document EP-A-1204060 and document JP-A-06259439 discloses damage analysis systems and processes. Document JP-A-09081739 disclose the use of three-dimensional data in analyzing damages. US 2012/0676437 A1 relates to claims processing, and more particularly, to expediting the claims process for any industry, such as automobile insurance, civil engineering, public works, construction, fraud prevention, security, traffic enforcement, shipping, inventory control, etc., where an inspection, comparison, verification or observation process occurs.

The present invention aims to provide a process and a system to identify, analyze and estimate deformations, in particular in motor vehicles, which can simply and cheaply solve the problems of known systems and devices to locate deformations and estimate the deformation severity.

The invention reaches the above objects with a process and a system, according to the respective independent claims, to identify, analyze and estimate deformations, in particular in motor vehicles, wherein the evaluation of the deformation and of the damaged regions performed objectively.

It is intended that the enclosed claims are an integral part of the present description.

The features of the invention and the advantages deriving therefrom will be clearer from the following detailed description of the enclosed figures, wherein:

    Figure 1 is a block diagram of the main element of the system according to the present invention;
    Figure 2 is a flow diagram which shows the operating scheme of the recursive algorithm; and
    Figure 3 is a flow diagram, which describes how the position of a point with respect to a triangle is verified.

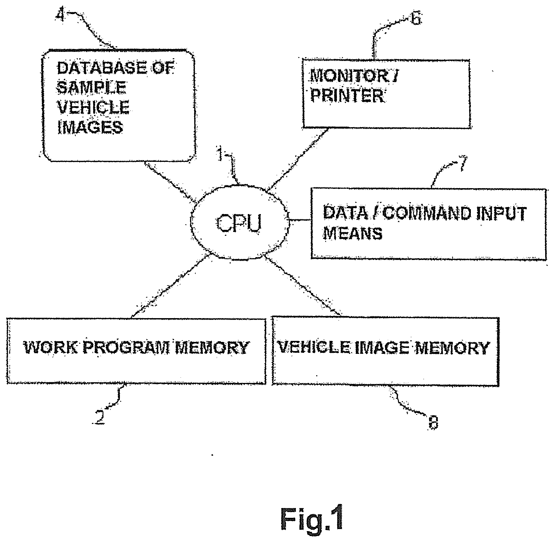

In the system of Figure 1, an operator inserts and loads in the vehicle images memory 8 a three-dimensional image of the damaged vehicle through means for inserting data or commands 7; afterwards, the operator recalls in the images memory of the damaged vehicle a three-dimensional image of the sample vehicle from the data base of images of sample vehicles 4, said image of sample vehicle corresponding to the image of the damaged vehicle, namely the two vehicles must be of the same make, model and type. Through the working program, the CPU compares the three-dimensional image of the damaged vehicle with the corresponding three-dimensional image of the sample vehicle identifying by comparison said two images: the location of the damage or deformation and the detection of the distorted regions. Then, the CPU through the working program, stores the results of said comparison in the memory of working programs and, through algorithms implemented from the working program, it computes the area and/or the volume, and/or identifies the position in the space of the damage on the vehicle by using the computing algorithm implemented from the working program on the distorted regions and/or on the results of said comparison stored in the memory of working programs. Therefore it is clear that, in order to advantageously compute the volume of the distorted or damaged region, three-dimensional images are used, allowing the CPU to automatically compute the deformation depth in comparison with the corresponding three-dimensional image of the sample vehicle.

A scanning unit 9 is further provided. The operation of the scanning unit 9 provides for a scanning of a vehicle, preferably with a laser, giving as result an array of image data or a three-dimensional image of the vehicle, which identifies the points composing the contour of the vehicle.

In the selection in automatic mode, the working program compares the image of the damaged vehicle with all images of the database of sample vehicles and recalls from the data base of images of sample vehicles the three-dimensional image of the sample vehicle, which by comparison corresponds much more in the points with the image of the damaged vehicle.

In the automatic selection mode, once the two images of the damaged vehicle and of the sample vehicle are present in the memory of vehicles, through the working program the CPU compares the three-dimensional images of the damaged vehicle and of the corresponding sample vehicle detecting the points where a deformation or difference occurs.

The results of said comparison between images of damaged vehicle and images of sample vehicle are then inserted in the memory unit of the working program, which, through the CPU for every point and/or small area, identifies the occurred deformation, and computes the perimeter, area of damaged region and/or deformation volume and/or deformation depth through known algorithms.

According to a preferred solution, it is possible to provide that, upon request of the program, the operator inserts an agreement or refusal command for said sample vehicle chosen from the CPU and displayed on the monitor by the operator, in order to have a confirmation of the automatic selection from the CPU through the working program.

Regarding the definition/selection/computation of the damaged or distorted areas and/or of the volumes, a dimension and/or an area and/or a volume of damaged regions of a particular type of vehicle are stored in the working memory.

The working program is such that the CPU identifies through various forms, parts which compose a vehicle and combines them with predetermined identification codes of the vehicle parts, for example identifying whether the damage is on the doors or on other different parts of the vehicle.

According to the present invention, the CPU is provided for interacting with a database of parts composing the vehicle, every parte being identified by a code.

The working program through the database and the selection of parts is capable of locating the damage with reference to the vehicle parts which are distorted on in any way damaged; for example in Figures 9 and 10 the working program has identified that the selected damage region extends on both doors of the shown vehicle.

Therefore, the CPU through the working program produces and combines on every vehicle part affected by the deformation or damage a severity degree of the deformation proportional to the deformation itself, namely the dimension and/or the area and/or the volume of the damaged part.

The database of vehicle parts provides in combination for an additional database of times and/or costs to replace and repair parts, and thereby the system through the CPU and the working program provides for evaluating the cost and the necessary operations for reconstructing the part by comparison with a database of times and costs of motor vehicle parts.

In particular, the evaluation of times and costs is preferably divided into three steps: repairing the metallic sheet, or working the metallic sheet, painting and assembling/disassembling the parts.

The database of times and costs of the motor vehicle parts for every motor vehicle part has preferably a minimum evaluation and a maximum evaluation of the necessary time and/or cost for repairing the metallic sheet, or working the metallic sheet and/or painting and/or assembling/disassembling parts and for every motor vehicle part further has a list of parts to be disassembled/reassembled for disassembling/reassembling every single part.

Thereby, the system combines on every damaged part an evaluation of time and/or cost preferably divided into said three steps (repairing the metallic sheet, or working the metallic sheet, painting and assembling/disassembling of parts), said evaluation being chosen automatically, through dedicated working algorithms, from the CPU in the range which goes from said minimum evaluation to said maximum evaluation of the necessary time and/or cost proportionally to the severity degree of the deformation or damage assigned to every part.

Therefore, the system sums necessary costs/times for the three steps of every part of damaged vehicle and points out the obtained results through said unit for displaying the results, preferably through a monitor.

For every damaged part, the system compares said sum of costs/times necessary for repairing with the necessary cost/time to completely replace said damaged part with a new part, and preferably automatically chooses to replace said damaged or distorted part or whether repairing the same part by choosing the minimum cost/time.

Also in this case, the system shows the obtained results through a displaying units for results, possibly requesting the operator for a confirmation of the preferred choice.

It is also possible to provide the system connected to a database of motor vehicles parts in a warehouse so that the system compares the parts to be replaced with the parts in the warehouse, producing a report with available parts/unavailable parts, and possibly producing an order on paper or electronically to supply the warehouse with parts taken for replacements and/or unavailable parts.

The invention further provides for a process for automatically identifying, analyzing and estimating deformations in motor vehicles, said process comprising the following steps:

- loading image data relevant for at least one three-dimensional image of a damaged vehicle in a vehicle images memory;
- in the images memory of the damaged vehicles, recalling the image data of at least one three-dimensional image of a sample vehicle from a database of images of sample vehicles, said image of sample vehicle being the image of a type of vehicle corresponding to the type of damaged vehicle;
- displaying image data relevant for the image of damaged vehicle and the corresponding type of undamaged vehicle;
- automatically comparing the three-dimensional image of the damaged vehicle with the corresponding three-dimensional image of the sample vehicle identifying, through an automatic comparison between said two images: damage position or deformation and detecting the distorted regions;
- selecting through graphical tools for delimiting or pointing out the damaged or distorted regions identified by the automatic comparison on at least one of the two images;
- storing image pixels and respective image data selected as corresponding to the damaged or distorted regions as result of said comparison in a memory of a working program;
- computing perimeter, area and/or volume from the damaged or distorted region or regions and/or further morphologic parameters through algorithms implemented by a working program, and/or identifying the position in space of the damage on the vehicle using the computing algorithm implemented from the working program on distorted regions and/or on results of said comparison stored in the memory of working programs;
- computing a deformation severity degree and assigning said deformation severity degree to every damaged or distorted region;
- computing labor times and costs for repairing the damaged or distorted area, starting from such computed perimeter, area and/or volume and/or morphologic parameters, using a database of available repair times and costs for every type of vehicle; and
- producing a virtual image of the sample vehicle, which is composed of the set of virtual images of the single structural parts of the vehicle, which form independent structural units, namely single parts of the vehicle, which virtual image is displayed as image of the assembled vehicle or as image of the exploded vehicle, every structural part of the vehicle being univocally identified by an identifying code, and corresponding to the same structural part of the damaged vehicle;

wherein the step of computing perimeter, area and/or volume from the damaged or distorted region or regions and/or further morphologic parameters, and/or identifying the position in space of the damage on the vehicle is performed through the following steps:

- acquiring data through laser scanning, wherein the laser scanning technology digitally acquires three-dimensional objects of various sizes as clouds of points. The geometric digital description of the object is discrete: the greater the resolution set for acquiring, the denser the cloud of points, and therefore the showing detail, will be. Each point is defined by a space position with coordinates x y z with respect to the point of origin represented by the scanner position and, if the scanner is capable of also detecting the photographic mapping of the object (through an embedded digital photo-camera), from the RGB value, therefore from the chromatic value of the acquired point. As regards the types of scanner, 3D laser scanners can fundamentally employ two measuring types: the flight time, for big objects spaced by 2 m to over about 150 m (palaces, squares, monuments), or the optical triangulation, for very high resolution scans of objects with reduced sizes placed at a distance from about 0.6 to 25 m. The scan resolution ranges depending on the type of instruments and on the aims of use, from sub-millimeter values (down to 0.21 mm) of the scanner, which use the optical triangulation, to millimeter or centimeter values of flight time scanners.
- post-processing data: after having acquired data, a series of operations are performed, which allow 3D displaying for the performed acquisition.

Herein below, the various performed steps are included, in execution order:

a) aligning of scans and recording

Each scan produces a cloud of points, which partially describe the object, both because the emitted laser ray etches the object from a particular angle (point of view), and therefore the hidden surfaces will remain occluded also when digitally acquiring, and because the visual scanner field is limited to a certain angle (generally 40°-60°). For this reason, it is necessary to perform numerous scans to obtain a total acquiring coverage.

To be able to align and re-compose in a global showing the partial clouds of points obtained from each scan, it is necessary that the various scans have common overlapping zones (at least about 30%) comprising object points which are easily recognizable. When aligning (or recording) the partial clouds, it will be necessary to point out to the software which are the common connecting points on which the various scans has to be correctly aligned.

In order to work with a better accuracy, "aims" or "targets" with various shapes and sizes (spherical, with plane disk, etc.) can be used, which are generally supplied with the scanner, and are therefore part of a proprietary system, which automatically recognizes and classifies them, through software, as soon as every single acquisition ends.

A potentially even more accurate recording system provides for the use of topographic data (detection of position, of well recognizable points of the object or target).

b) cleaning the cloud of points and filtering the noise

Isolated points are removed, and the noise produced by the standard deviation of the scanner is cancelled.

c) triangulation and building of the mesh

This is a very delicate operation whose good result depends on the quality of acquired data.

d) closing of mesh holes and correcting the anomalous faces

Often, due to noise or absence of data in the meshes, which have to be integrated, in the final model there are empty spots or "holes". They are undesired from an aesthetic point of view and as regards the attempt of reproducing the real object as faithfully as possible.

e) applying textures to the 3D model

The final result of applying a texture must appear as perfect overlapping and an accurate geometric correspondence, with respect to the real surface of the object.

- displaying the obtained result

Purpose of displaying is making the acquired data capable of being interpreted in the best possible way.

As regards management and structure of 3D data, in modern data acquiring and managing systems, the 3D scan produces, in a more or less direct way, a series of triplets of coordinates, each one corresponding to each acquired point.

The obtained values can be organized in a rectangular matrix, actually an image, called RI (Range Image, namely nxm grids of distances which describe a surface with cylindrical or Cartesian coordinates), in which each pixel assumes a depth value with respect to a reference point or plane. The placement of the pixel in the grid determines the position of the point on the reference surface.

The thereby organized data have the strong operating advantage of their compactness. For each point, in fact, it is enough to store only the depth piece of information to reconstruct the Cartesian triplet, which describes its coordinates.

This representation of the object is however intrinsic, since referred to the point of view which generated it: the occlusions determined from the foreground objects with respect to the background objects cannot be directly filled. To be able to make the scene extrinsic, namely make it usable from any point of view, usually one proceeds through triangulation algorithms of the Delaunay type.

Through this passage, each pixel, after having been declared in its three 3D coordinates, is connected to other two pixels through segments called edges in order to form a triangular face, generally characterized by a normal, which determines its orientation in space. Each vertex is shared by many faces.

In particular, the Delaunay triangulation proceeds with these steps: given n points in a plane, they are joined with segments so that every region inside the Convex Hull is a triangle.

The Delaunay triangulation is a planar graph. To build the Delaunay triangulation, it is enough to trace a segment between every pair of points, which share an arc. This process divides the convex envelope into triangles. Every point is thereby connected through an arc with its nearest points.

- managing data in the program used through meshes of polygons

Data coming from various scans are collected in a data structure created and managed by the program for managing 3D acquisitions on which one has worked. The meshes have been computed from clouds of points and have been afterwards subjected to triangulation. The triangle is the simplest convex polygon and due to this it is chosen as reference.

The triangulation allows performing a series of graphic operations which would not be possible only with the clouds of points, such as for example applying surfaces, colors and texture, computing area, perimeter, filling holes, removing irregular parts and removing inaccuracies of data detected by the scanner.

The most complex surfaces need more triangles to be represented. The greater the number of triangles, the better the capability of the model to represent the details.

A mesh of polygons is composed of a collection of sides, vertexes and polygons mutually connected so that each side is shared by two polygons maximum. A side connects two vertexes, and a polygon is a closed sequence of sides. A side can be shared by two adjacent polygons, a vertex is shared by at least two sides, and every side must finally be part of some polygon.

A mesh of polygons can be represented in different ways; moreover, different representations can be used also inside a single application. In fact, it is possible to choose a representation for external storage, one for internal use, and another one to interactively create the mesh.

The basic criteria for evaluating the different representations are the cost in time and in space of the representations themselves. The typical operations on a mesh of polygons are:

finding all sides incident on a certain vertex;
locating the vertexes connected by a side;
finding the sides of a polygon;
displaying the mesh;
identifying possible errors in the representation (for example missing vertexes, or sides, or polygons).

As regards the representation of meshes of polygons, there are three possible types of representations of meshes of polygons.

In the explicit representation, every polygon is represented by a list of coordinates of vertexes: $P = ((x1, y_l, z_l), (x2, y2, z2), ... , (x_n, y_n, z_n))$.

Vertexes are stored in the order according to which one would want to meet them when moving along the polygon. In other words, the pairs of following vertexes are connected by sides; moreover, there is a side which connects the last vertex of the list to the first. For a single polygon, this representation is efficient in space; for a mesh of polygons, instead, some space is uselessly employed, because the coordinates of the shared vertexes are stored twice. Moreover, there is not an explicit representation of the shared sides and vertexes. For example, in order to drag a vertex together with all sides incident thereon, in a typical interactive application, one has to find all polygons, which share the selected vertex. This search requires different comparisons between the coordinates of the vertexes of a polygon and those of all other polygons. The most efficient method to carry out this task would be ordering all N coordinates, operation which requires, in the best of cases, a time on the order of N log2 N.

Moreover, there is also the chance that, due to rounding owing to computation, the same vertex can has different coordinate in every polygon. As regards displaying, this representation requires the transformation of every vertex and the clipping of every side of each polygon. Moreover, the shared sides are drawn twice, and this can insert inconveniences due to overwriting. In the polygons defined using the pointers to lists of vertexes, every vertex of the mesh of polygons is stored in the list of vertexes $V = ((x_l, y_l, z_l), (x2, y2, z2), ... , (x_n, y_n, z_n))$ only once.

A polygon is therefore defined by a list of pointers to the list of vertexes.

This representation has several advantages. Firstly, it guarantees a strong saving of memory space. Moreover, the coordinates of a vertex can be easily modified. On the other end, however, it is still difficult, from the point of view of computations, to find the polygons which share a side, and the shared sides are again drawn twice.

These two problems can be removed by explicitly representing the sides, as occurs in the representation through pointers to lists of sides. In this case, there is still a list V of vertexes, but the polygon is represented by a list of pointers to a list of sides, wherein each side appears only once. Moreover, next to each side in the list, there are two pointers to the pair of vertexes, stored in the list of vertexes, which define its ends, and one or two pointers to polygons to which the side belongs.

Therefore, a polygon is described from the list $P = (L1, L2, ... , L_n)$ and a side from the list $E = (V1, V2, P_l, P2)$. When a side belongs to a single polygon $P_l$ or P2 will be null.

The polygons are represented on the display by displaying their sides, in order to avoid redundant clipping and scan conversion operations.

In none of the three representations, the determination of the sides incident to a certain vertex can be made efficiently: all sides must be inspected.

Obviously, it is possible to add explicit information to allow determining these relationships in a more efficient way.

- representing data in the 3D acquiring program

The choice which has been made in the managing software of 3D data is keeping a list of sides, a list of vertexes, a list of triangles of the object and an optional list of triangles which point to each vertex, created and devised for processing and data managing needs.

To remove the redundancy of vertexes, the first thing that has been made is building a list of the vertexes (without repetitions) using an array "Vt".

In this way, doubling of vertexes is removed, but not on the sides: a side belonging to two triangles is stored twice.

Incidence searches continue to be complex.

A second step has been removing the redundancy of the sides. A list of the sides (array "Et") has been built, ordered on vl and then v2, each composed of two integers indicating the position, in the array of vertexes, of the two vertexes incident on the side.

For example, the side ll points to the two vertexes a and b, the side 12 points to vertexes b and c and so on.

As regards the list of triangles ("Tt"), it contains all triangles in an array of polygons "Tpol". Every triangle has an information about its normal (components Nx, Ny, Nz), the texture indexes (if present) and an array containing three integers which represent the positions in the array of vertexes "Vt" of the vertexes belonging to the triangle.

As regards the additional optional list of triangles which point to each vertex, it is composed of a vector of integers containing the indexes of the vertexes used by every triangle.

- correcting the defects of acquiring with rebuilding of missing areas

Data obtained by scans of 3D models typically contain missing parts and empty spots or "holes".

These can be caused by scans with artefacts or by too deep recesses on the model which cannot be observed with a particular scanning angle.

Moreover, the empty spots can be caused also by low reflection (for example parts which reflect the laser ray due to material of which they are composed), by limits which deal with positioning the scanner laser or simply by missing views.

Moreover, the empty spots can be caused also by low reflection (for example parts which reflect the laser ray due to material of which they are composed), by limits which deal with positioning the scanner laser or simply by missing views.

The filling of holes can be performed as post-processing operation, applied after the rebuilding of the surface or can be integrated in the rebuilding algorithm of the surface. In this second case, a distinction must be made between rebuilding algorithms which operate on connected meshes of a set of samples and algorithms which operate on clouds of points in 3D.

- filling as post-processing

In order to fill areas of a surface just reconstructed, a widely used approach is triangulating each connected component of the surface, in order to obtain a polygonal mesh and only afterwards filling each empty spot with a certain chosen algorithm.

- rebuilding based on meshes with filling of empty spots

In such case, every scan is treated as a Range Image. An algorithm of this type, widely diffused in literature, is the one created by Curless and Levoy (VRIP). With this method, the space is represented with a set of elementary cubes (voxels) and not with surface elements (pixels). The idea underlining every volumetric method is assigning a function $D(x)$ to points in space, sampling it next to the voxels into which the space is divided and extracting a surface implicitly defined by $D(x) = s$, where s is a given threshold. The function $D(x)$ is the distance with sign between point x in space and object surface.

The sign points out the position of the point with respect to the object: internal and external points will have opposite signs. When function $D(x)$ is computed, the iso-surface can be easily extracted, namely the surface with threshold $s = 0$, therefore at a null distance from the object. It corresponds to the best approximation of the searched model.

$$D(\mathbf{x}) = \frac{\Sigma w_i(\mathbf{x})d_i(\mathbf{x})}{\Sigma w_i(\mathbf{x})}$$

$$W(\mathbf{x}) = \Sigma w_i(\mathbf{x})$$

where D(x) is the implicit function being searched and W(x) is the cumulative function of weights assigned to each vertex of the surface. x is the point whose distance from the surface has to be computed; d(x) is the distance between point x and mesh M, wi(x) is the weight associated with the i-th point p, intersection between mesh and the straight line starting from the sensor of the measuring system and passing by point x.

To the voxels of the volume containing the object, one of three statuses is assigned: not visible, empty or next to the surface. The steps of the algorithm are as follows:

1. All voxels are initialized to the not visible status.

2. A distance function is assigned to voxels next to the surface, as described above.

3. Lines are followed, which join the measuring sensor to points of the mesh and the empty status is assigned to voxels outside the surface. This process is called space carving.

4. In addition to extracting a iso-surface at distance d(x) = 0, a surface is extracted between voxels with empty status and voxels with not visible status.

The result is obtaining an intersection of all points recognized as internal to the surface, to which the not visible status is assigned. The final surface is extracted not only where d(x) = 0, but also between the points evaluated as external, or with empty status, and those internal ones or with a not visible status.

- rebuilding from clouds of points with filling of empty spots

The third method treats with the union of all scans as a single disorganized set of 3D points, which must be adapted to a continuous surface. In this way, a single surface is created and the empty spots are simultaneously removed, integrating information coming from the laser scanning.

In case of a voxel-type volumetric display, in literature often a polygonal representation is used for the surface obtained through the algorithms of the marching cubes and of the dividing cubes.

- correcting the acquisition defects in the managing program of 3D data

For this purpose, an algorithm is used for filling empty spots made for the managing program of 3D data.

A volumetric method has not been used, but information deriving from the triangulation of meshes and from the edge sides computed as lines to which a single triangle points, has been taken into account.

Various algorithms have been made before coming to a satisfactory rebuilding of the surfaces.

All algorithms are capable of filling many holes present in the selection if belonging to a single object. If surfaces belonging to many objects are selected, an error screen is displayed.

For the operation of the various algorithms, an active selection is necessary on the surface part, which comprises the bug. First of all, the edge sides are computed which are inside the manually performed selection, and they are put in an array of sides which is passed to an external function for processing. This latter one operates for controlling whether the sides belong to a closed contour and whether a single closed contour exist or if there are many contours in the selection.

The sides are ordered so that the vertex vl of the first side placed in the array is equal to the vertex v2 of the contiguous side in the array.

If the vertex v1 of the side contiguous to the i-th side is v1, it is inverted with v2 and consequently v2 with v1, to be able to perform checks on consecutive sides always on vertex v1.

What is passed for reference to the main algorithm is a new array of ordered sides belonging to a single contour (if present).

The used recursive algorithm does not add points to the object, but closes the bug by joining the vertexes of the contour with a certain sequence, in such a way as to triangulate the empty spot. The main purpose has been filling the holes areas, not taking into account the possible overlapping of the sides of the bug contour.

With this algorithm, like with the other made ones, it is possible to detect the presence of branches in a bug, but differently from the following ones, the presence of intersections between the sides of the contour is not checked.

The vertexes belonging to more than one closed contour are considered "branches".

The main steps of this algorithm are:

the search of the first side in the array of sides and of the vertex vl of the consecutive side;
the formation of a new triangle using vl and v2 of the i-th side and vl of the side (i-th + l);
the iterative addition of further triangles for filling the whole area of the empty spot;

the computation of normal lines to triangles;
the copy of the indexes of the textures associated with the triangles;
a further check for the search of other contour sides and the possible filling of the other closed areas.

The problems that this type of process has given are related to the possible presence of intersections between the edge sides as already mentioned and the external vertex-vertex union for forming a new triangle, not taking into account internal obtuse angles.

A second algorithm being made, called barycentrical, deals with filling the empty spots present on the selected surface by computing for each one of them the barycenter and then creating new triangles inside the various holes.

The algorithm is capable of filling all empty spots present in the selection because it cyclically search for the closed contours inside the mesh, till none is found.

Each empty spot is taken into account and filled differently and independently from the other ones being present.

1. The barycenter consequently is computed by suitable applying the averaging operation to the coordinates x, y and z of the various vertexes of the bug. A new vertex is thereby obtained, which is added to the vector of total vertexes of the object (Vt).
2. Afterwards, the barycenter of all new virtually created triangles is computed; only at that time, the total list of total triangles of the object (Tt) is updated.
3. The only triangles added are those which have as vertex the barycenter computed in step 2.

These totally cover the surface of the empty spot and make the object mesh thicker in that area, with respect to the triangles obtained in step 1.

As already stated, the algorithm, after having closed a bug, searches for another possible bug inside the performed selection. According to the same process of the previous algorithm, if a branch is not found, the closed surface upstream of the branch and the downstream one (if they exist) are considered as two different holes.

This algorithm for rebuilding the surfaces has been inserted in the final version of the program and its use is advisable for empty spots of the circular, elliptic shape and the like.

It instead works incorrectly if the holes have a "U" shape, since in this case the barycenter of the hole falls in the surface part already subjected to triangulation or anyway creates intersections between the sides.

The optimized recursive algorithm is inserted in the final version of the managing program for 3D data.

The major difference with respect to the previous recursive algorithm is the introduction of a voxel creating device often mentioned in literature for subjecting the polygons to a triangulation.

The voxel creating device allows filling simple concave polygons, thereby covering the majority of possible situations on a holed surface.

The only particular condition which is not dealt with and solved is the presence of a closed contour inside another one, namely the presence of an "island" inside a hole.

Instead, the following cases are solved:

- external unions caused by the presence of obtuse angles inside the hole surface
- union with possible intersection of the sides
- self-intersecting contours (signals the wrong contour and stops).

An additional complication, with respect to the previous recursive algorithm, has been having to take the points (vertexes) of the closed contour from 3D to 2D to verify possible intersections between the sides.

The N 3D vertexes belonging to the green sides being considered have already been ordered, since they are the vertexes vl of every side of the contour arranged in the array of ordered sides (Ec) .

The vertexes are projected in a plance searched as the "best plane described by the N 3D points".

The equation of a generic plane in the space is:

$$Ax + By + Cz + D = 0$$

where A, B, C are the coefficients which define the normal line to the plane.

The coefficients are computed according to the following expressions:

$$A = \frac{1}{2} \sum_{i=0}^{N-1} \left\{ (z_i + z_{i+1})(y_{i+1} - y_i) \right\}$$

$$B = \frac{1}{2}\sum_{i=0}^{N-1}\left\{(x_i + x_{i+1})(z_{i+1} - z_i)\right\}$$

$$C = \frac{1}{2}\sum_{i=0}^{N-1}\left\{(y_i + y_{i+1})(x_{i+1} - x_i)\right\}$$

They are then standardized to obtain D in the correct form:

$$A = \frac{A}{\sqrt{(A^2 + B^2 + C^2)}} \qquad B = \frac{B}{\sqrt{(A^2 + B^2 + C^2)}}$$

$$C = \frac{C}{\sqrt{(A^2 + B^2 + C^2)}} \qquad D = -\frac{(Ax + By + Cz)}{\sqrt{(A^2 + B^2 + C^2)}}$$

When the 2D coordinates are known, they are saved in a vector belonging to a data structure which has three fields: two float x, y for the coordinates and an integer id for storing the value of vl of the side, namely the position of the vertex in the vector of total vertexes of the object (Vt).

The first performed check deals with the self-intersection of the contour sides. If this search provides a negative result, it is checked whether the 2D vertexes are stored with clockwise or counterclockwise movement direction on the contour.

If the direction is counterclockwise, the vector is reversed.

A very important function, created for the correct operation of the voxel creating device, deals with computing all N internal angles formed by every pair of sides of the contour.

In order to store each angle value (measured in radiants) a similar structure to the one of 2D vertexes is used.

In such case, the angle value is saved in x and the value of the vertex related to that angle is saved in id. Field y is used afterwards for processing.

Once having obtained all angles, the first angle of the array is compared with all other angles, to search for the one with the maximum value.

This search has been performed to decrease the number of obtuse angles since the first steps of the algorithm.

The first triangle being created will be the one with angles 200°, 83° and 77°.

When the maximum angle is known, further checks are performed.

It is checked that the new segment, joining the vertex related to the maximum angle and the following vertex of two positions, has not been built outside the hole.

The segment that has to be created is analyzed to add a triangle to the object structure, so that it does not intersects any of the already existing green sides of the contour.

If one of these checks provides a positive result, the current maximum angle must be marked (using field y of the data structure used for the angles); a new maximum angle is searched among the remaining ones and the cycle starts again.

If instead no particular cases occurred, the three id are added, pointing out the indexes of the necessary vertexes for a new triangle, to a data structure containing a three-position vector.

The 2D point in the following position to the one with maximum angle must be deleted, because from now on this will not be any more a vertex belonging to the contour sides.

The algorithm cyclically operates as far as there are more than three edge vertexes. When only three vertexes are found, they are inserted in the structure containing the vertexes in triplets for the new triangles.

These last ones will be added to the list of total triangles of the object (Tt). In the main part of the algorithm, the normal lines of the new added triangles are computed (based on the knowledge of the normal lines of the triangles adjacent to the contour) and the texture indexes (if present).

The final result is a voxeling applied to a polygon.

The improvement provided by the triangulation with the voxel creating device is clear.

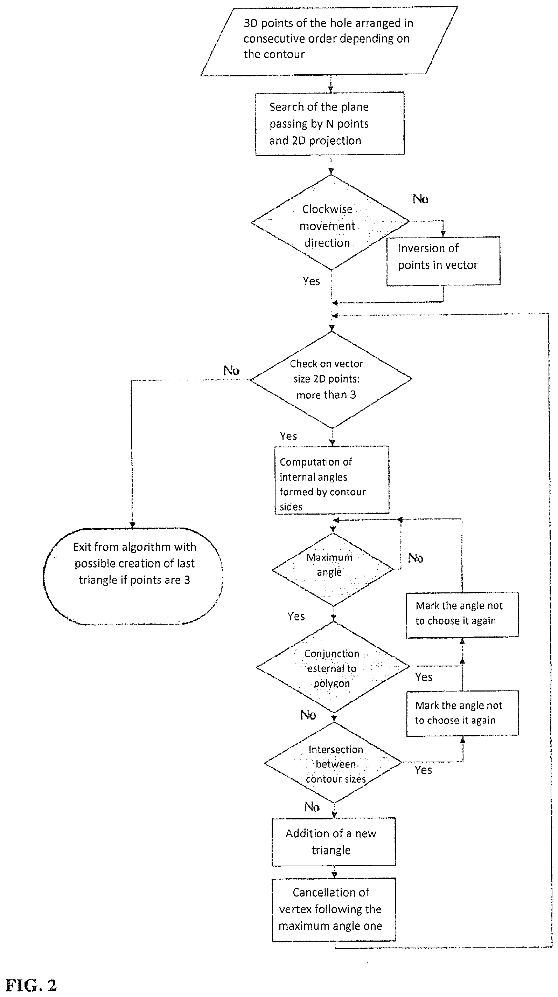

Finally, Figure 2 shows a flow diagram with the operating scheme of the recursive algorithm.

The integration of various 3D images acquired with a scanner laser is the central step of many software applications. Assembling the various views in a single polygonal surface is an operation, which requires a very heavy computation, particularly if the 3D surfaces 3D are modeled with the voxels, as can be often found in literature.

Locating exactly where the points of an object A intersect the points of an object B in the tridimensional space is much more complex with respect to the two-dimensional case.

In the 3D the sides of A can pass below or above the sides of B without their surfaces mutually touch, giving anyway the visual idea of an intersection.

Herein below the methods implemented for rebuilding of surfaces starting from da range images are described Works published in literature dealing with the integration of many meshes can be classified into two big classes: structure method and non-structured methods.

The non-structured integration is made by joining together all points deriving from the laser scans, then supplying them to a polygonal rebuilding procedure.

The Delaunay triangulation of a set of points in the 3D space has been proposed as basic method for rebuilding.

Structured integration methods use information dealing how each point has been obtained, using the error limits on the position of a point or nearness information between the points within a certain range image. The Soucy and Laurendeau algorithm, widely known in literature, uses a structure integration technique to combine multiple images.

This is a parametric method because it performs a re-parametrization of the range images.

It has been seen that a range image is a collection of points (x; y; z) organized as a matrix. A plane is associated with each one of them, which is an image plan on which the object points have been projected, and a normal line to the plane, whose direction depends from the position of an observer. Often it is convenient to describe the surface as a matrix of points distributed on a regular grid in a two-dimensional parametrized space. The passage from the tridimensional space to a two-dimensional space must keep the injectivity characteristics: at most one point in the 3D space must correspond to one point in the 2D space.

As regards the parametrization on a two-dimensional plane space, the plane on which the parametrization (also called interpolation) occurs can be the image plane of the range image or any plane.

The Soucy and Laurendau algorithm is based on canonic subsets of the range images. The term canonic subset of K range images means the points present in all K images, obtained by the intersection of these images and absent in the other images.

By distinctly modeling all subsets, portions of surface are obtained which wholly describe the object and which do not mutually overlap. This approach however has a problem: in this way, it is not easy to model the surface areas corresponding to the edges between a subset and another, which result separate.

The Soucy and Laurendau algorithm is one of the first algorithms which have solved the problem of computing a surface starting from different range images.

The Turk and Levoy algorithm is another approach to the integration problem.

The basic idea consists in the removal of the overlapped parts to obtain portions of surface which are used to form the final model.

The algorithm can be divided into four following steps: given a pair of range images A and B:

1. The areas of the meshes which overlap are removed.

2. Zippering is performed, namely the two parts are joined through clipping, "cutting" operation of one of the meshes.

3. The smallest triangles which can be obtained in the second step are removed.

4. The thereby obtained vertexes are moved towards a "consent position".

The process for removing redundant areas operates in this way: the triangles on the edges of the meshes are examined and are removed if redundant.

The process goes on till there are no more redundant triangles. Given a triangle of A, it is redundant if one of its vertexes is within a limit distance from B. Two meshes are obtained which partially overlap only next to the edges. Now this zippering operation joins the obtained surface areas.

The main operating steps of the algorithm are:

- creating a new object with the modifications due to the application of the algorithms for filling the empty spots or for joining two objects. If the creation of new objects has not been chosen, the modifications are performed on the starting object/objects;
- integrating and joining two meshes;
- choosing a distance threshold from the single plane on which each triangle of object A lays with respect to the points of object B. It has been established at software level that the distance threshold refers to a virtual plane above and a virtual plane below the plane of the single triangle;

- considering as removable also the points of B which lay outside the triangles of A, but within a certain distance, fixed by such threshold. The two thresholds have been set at default values which are the suitable results for the scans used as test;
- removing the parts of surfaces which overlap.

It is necessary that only two objects are visible for the algorithm to operate.

All this is explained in detail below and includes the use of the previously established thresholds.

It is possible to create a single object starting from two previously saved different objects, or to which the algorithm for removing overlapped areas has been applied. In this case, it is necessary that there are two visible objects.

If a single object is visible, it is possible to join the two strips of the object which is displayed, in such a way as to completely cover that part of surface which, due to the removal of overlapping, is currently without triangulation.

As regards the integration method, to be able to remove real overlapping and deep overlapping, it has been necessary to work on objects subjected to triangulation, because it is necessary to have information of the list of total triangles of an object and of the list of sides.

The performed algorithm consists in a series of major steps, each one of which will be explained in detail below:

1. Removing the overlapped portions of two meshes
2. Joining the two meshes in a single new mesh
3. Filling the internal area to the two contours obtained with the addition of further triangles

1. Removing the overlapped portions of two meshes

Before being able to join two acquisitions or two objects previously saved in a single file, it is necessary to remove the triangles of a mesh which lay, within a certain tolerated distance, inside the other mesh.

As starting point for studying overlapped surfaces, two rectangular surfaces arranged perpendicular to axis z have been created and inserted in the managing program for 3D data.

The two surfaces have been used to try and remove the overlapped areas in the 3D space.

If the two surfaces are seen frontally, they seem overlapped while, if slightly rotated, they appear as two different objects which lay on two different planes of the 3D space.

Like these two surfaces which overlap only visually, also the acquisitions obtained through scanner laser can mutually intersect only visually.

In order to better under stand what is meant as visual intersection or depth overlapping, always two objects A and B can be taken as reference and one can think of build a surface above and a surface below A and afterwards verify the presence of points of the contour of B inside the object that is being created.

In this way the presence and use of a distance threshold from the plane is clarified.

In order to remove further edge vertexes of B present outside the object A, a second threshold is introduced.

These points are in strict nearness to the contour of A and due to this, if they remain in the final object, can result an obstacle to joining the contours of the two objects which will be performed afterwards.

According to an example of situation similar to the described one, the second threshold serves to allow a user to also remove some external vertexes. With a certain threshold value, the vertexes pointed out with a red circle can be removed. This operation is possible also after having performed the algorithm already one time; in fact, by performing the algorithm again, the external vertexes would be removed, since they are deemed an obstacle for a good union result.

A difference of the Turk and Levoy zippering algorithm in which only the vertexes of one of the two objects are removed in the overlapping area, in this algorithm the vertexes of both objects are removed.

To be able to perform this operation, the two objects are cyclically reversed, passed as reference to the function which removes the overlapping. Visible objects must necessarily be only two so that it can be possible to use the described algorithm.

The first operation which is performed inside the algorithm is the local copy of the edge vertexes of an object and the copy of the list of triangles and of the list of vertexes of the second object.

Taking as reference two objects A and B, the second above mentioned object will not always be the object B, rather will be once B and afterwards A.

Differently from the algorithms for rebuilding the missing areas, in this case it is not necessary to operate a certain selection on the overlapped portion, because information deriving from the list of sides in the selection is not used.

For this reason, the computations are not very high, since the check on the overlapping must be performed for all triangles of an object and for all edge sides of the other object.

After having copied all edge vertexes of an object in a local vector and all vertexes and the triangles of the other object in other local vectors, a preliminary check is performed.

It is checked in fact whether the distance between the center of gravity of the j-th triangle of the second object and the i-th edge vertex of the first object is the greater of a length f obtained as:

$$f = c + d$$

where c = distance between the center of gravity and the vertex of the triangle which is further from the center of gravity and d = distance threshold from the plane.

If this computation provides a positive result, then the i-th vertex is discarded for the triangle in question, otherwise the algorithm is performed, because the vertex is inside a portion of the 3D space 3D restricted to a region near the triangle.

Only then the current triangle is projected from 3D to 2D (more precisely it is projected in the plane to which its three vertexes belong).

The projection of the triangle in the plane is performed using the equation of a plane in the 3D space (Ax + By + Cz + D = 0) and transporting it, with the help of transformation matrixes, the 3D coordinates of the vertexes into 2D coordinates.

Moreover, the i-th contour vertex is projected on the plane of the triangle of the opposite object (the one marked by the coefficients A, B, C and D computed in the previous step) and it is checked whether the vertex falls within the region of space delimited by the distance threshold from the plane.

If the vertex is inside this region, the integer variable a belonging to that vertex is placed to -1 (it will be used for the following creation of the triangles) and, in a further vector of integers, -I is stored in the position related to this vertex.

Otherwise, one goes on with a further check on the vertex, testing whether this latter one, in addition to belonging to the region of space delimited by the "plane distance threshold", is also inside the triangle.

In order to know whether a certain point is outside or inside the triangle taken as object, a function is made which checks, starting from the coordinates of the three vertexes of the triangle, when a point is internal, external or on the edge of the same.

From the algebraic point of view, a straight line divides the plane into three sets of points: two half-planes and the straight line itself.

The points of the Cartesian plane are then divided into the three sets according to the value of the polynomial $P(x, y) = a\,x + b\,y + c$. Namely, if $P(x, y)$ produces a positive value, the points belong to a half-plane, if negative they belong to the opposite half-plane, and if null, they lay on the straight line with equation $P(x, y)$.

Given two points $P0(x0, y0)$ and $P_l(xl, yl)$, the canonic (or implicit) equation of the straight line passing by te two points is:

$$x\ (y0 - yl) - y\ (x0 - xl) + x0\ yl - xl\ y0 = 0$$

The polynomial, first equation member, is null on the straight line, while it will provide positive values on a half-plane and negative values on the other half-plane.

The function PuntoInternoTrg(std::vector<punti2DF> trng) checks whether a point p is outside, on the edge or inside the triangle of vertexes a, b and c..

The function PuntoInternoTrg receives as arguments the coordinates of the vertexes a, b, c of the triangle and those of the point p to be checked.

With the function Segno it is checked whether the point p belongs in any case to the same half-plane which contains the third vertex with respect to the straight line passing by the other two: the product is positive when p and the third vertex belong to the same half-plane.

The products of the functions Segno, recorded in the control variables sl, s2 and s3, are then used to establish the position of point p with respect to the triangle of vertexes a, b and c.

sl, s2, s3 in fact contain the position of p with respect to the three sides.

If the value of the control variables is in at least one case negative, point p is outside the triangle.

If the check values are all positive, the point is outside the triangle. Finally, when no value is negative, but in some case is null, the point is on the edge of the triangle.

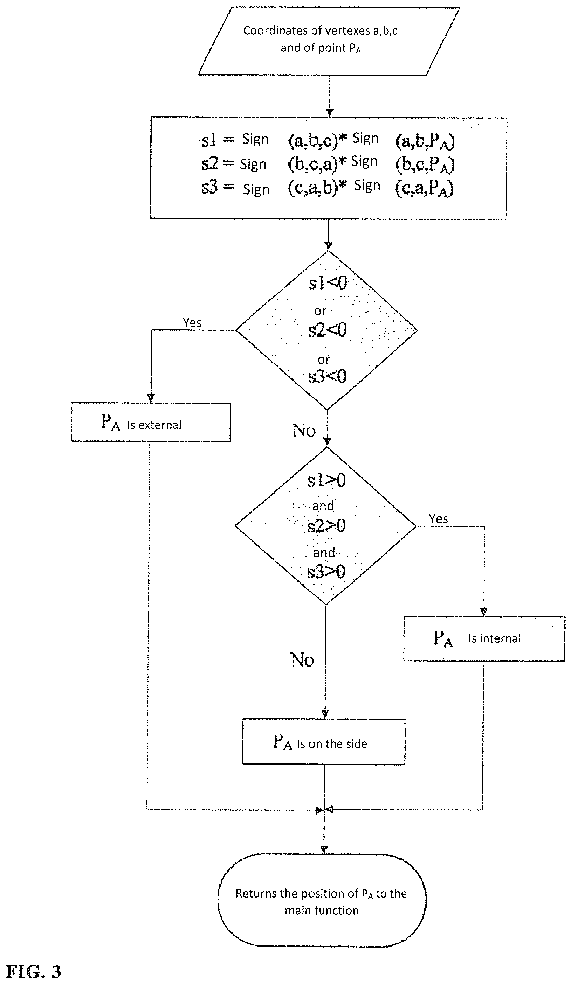

Figure 3 shows a flow diagram which describes how the position of a point with respect to a triangle is verified.

If the vertex is internal, variable a of the vertex is set to -1.

If the vertex is not internal, it is anyway verified whether the vertex is within the distance "soglia esterno trng". For this, a parametric equation is computed for a segment in the plane. It is computed for each side of the triangle.

This series of checks on the j-th triangle of the first object is performed for each vertex of the second object. After having ended the N vertexes, the (j-th + 1) triangle is analyzed with all vertexes which do not appear with value -1 in vector "verticieliminare.

After having ended the checks on the triangles of an object, its new list of vertexes and the list of triangles remained after removing the various vertexes, are created.

Then the two objects A and B are inverted (by exchanging the pointers) and this time it is checked whether the vertexes of A are overlapped to the triangles B.

To understand when the search for overlapped vertexes must be ended, at every cycle it is compared whether the size of the vector of total triangles of the modified object is the same of the new vector with the remained triangles. If the two sizes are the same, vertexes have not been removed from the object to be "modified" and therefore the search will not be performed any more in the following cycle for that object.

As regards the display of final objects, two situations can occur:

- it has been chosen to create two new objects and in such case the new objects are made visible while the starting one are made non visible;
- the modifications will be performed to the original objects.

Herein below some examples of application of different threshold values of the main interface Riempi buchi Unioni are included.

The result is anyway the one of obtaining two new objects according to the threshold values set at the beginning which must now be joined in a single object.

2. Joining the two meshes in a single new mesh

To create the missing surface in the area between the contours of the two objects, it has been decided to join these two in a single new object which will be added to the list of objects. The two objects become non visible while the new created object will be the only visible one.

3. Filling the internal area to the two contours obtained with the addition of further triangles

To integrate the portion of space between the contours of the two objects, remain empty after having removed the overlapped vertexes, it is possible to add triangles which cover the difference created between the two strips.

To do this, a selection of the chosen region of space is necessary.

The selection must be performed in order to comprise the green sides of two contours only or of a single contour shaped as a 'U'.

If more than two edge branches are selected, no space area is subjected to triangulation and the irregularity is signaled in the console generated by the main program when it is opened.

The triangulation of the portion inside the contours of the two objects is performed by using the previously described recursive algorithm.

The application of the recursive algorithm is possible only on closed contours.

For this reason, in order to fill the portion between the two branches, two further sides are added to the vector of edge sides:

- the one created by joining the first vertex of the first branch with the ending vertex of the second branch which is nearest thereto;
- the one obtained by joining the last vertex of the first branch with the remained ending vertex of the second branch.

If the selection is performed on a 'U' contour, the first vertex is joined with the last one to create the necessary side for closing the region of space. In order not to risk joining two vertexes of a rectilinear contour, a check is performed on the branch length: if the distance between the two end vertexes is lower than half the length of the branch, then one proceeds with closing and with the triangulation.

As regard the filling of empty spots with an island of points at the center, none of the algorithms being described is capable of removing empty spots with parts of surface inside them, namely islands of points subjected to triangulation at the center of a hole.

When making the joining algorithm of the contours, in fact, it has been possible to do without the lack of previously described methods.

Using the joining algorithm of two green branches, an empty spot containing an island of points can be removed. Initially, one can proceed by joining part of the contours of the empty spot in order to obtain a hole.

Afterwards, by applying the recursive filling algorithm on the surface now composed of a single closed contour, the empty spot is totally removed from the.

With the above described process, a comparison is made between data of relevant images with the image of the damaged vehicle and relevant image data with the image of the sample vehicle, the damaged and/or distorted regions being identified by the difference of image data between relevant image data for the damaged vehicle and relevant image data for the sample vehicle.

Moreover, the selection of image data of the sample vehicle from a database of images of sample vehicles is performed automatically, the image whose image data are different by a minimum amount from image data of the selected vehicle being chosen as image of the sample vehicle.

Image data are composed of a three-dimensional array of image data, every element of said array being univocally related to an image pixel of a two-dimensional image according to a plane passing through such pixel and the comparison between image data of the damaged vehicle and image data of the wide sample vehicle being composed of the comparison of image data which, in the two arrays of image data, have the same position.

In the inventive process, the area and/or the volume of the relevant image region is computed for the vehicle image pixel coinciding with the damaged region, which region is determined by selecting means and/or by automatically comparing image data of the damaged vehicle with image data of the sample vehicle.

Moreover, a virtual image of a sample vehicle is produced, which is composed of the set of virtual images of the single structural parts forming independent structural unit, namely individual vehicle parts, which virtual image can be displayed as image of the assembled vehicle or as exploded vehicle image and/or as transparence image of the damaged vehicle wherein also images of hidden parts are displayed, every structural vehicle part being univocally identified by an identifying code.

And still more, at least one external vehicle view is defined, preferably various external vehicle views taken from its different sides and/o in perspective and at least one internal vehicle view, preferably various internal vehicle views similarly to the external views, being it possible to graphically select one or more structural vehicle parts for their identification as damaged parts or one or more structural vehicle parts being identified as damaged parts by an automatic comparison between virtual images of the sample vehicle and virtual images of the damaged vehicle.

In particular, one or more images of the damaged vehicle are acquired also inside it, namely one of more images of the damaged vehicle inside.

The above described process, therefore, provides that the step of selecting, through graphical tools for delimiting or pointing out, the damaged or distorted regions, comprises the following sub-steps:

- identifying the damaged or distorted regions as specific parts of the vehicle (for example, bumper, hood, door, etc.);
- transforming the identified parts of the vehicle into objects to be mutually related in order to build a 3D database also containing a deformation depth value;
- using the 3D database, automatically comparing a damaged or distorted region with a sample region of a same vehicle; and
- using the 3D database, computing intervention times on the damaged or distorted region using a countour of the damaged or distorted area as delimited and identified, and the deformation depth value.

## Claims

1. - Process for automatically identifying, analyzing and estimating deformations in motor vehicles, said process comprising the following steps:

   - loading image data relevant for at least one three-dimensional image of a damaged vehicle in a vehicle images memory;
   - in the images memory of the damaged vehicles, recalling the image data of at least one three-dimensional image of a sample vehicle from a database of images of sample vehicles, said image of sample vehicle being the image of a type of vehicle corresponding to the type of damaged vehicle;
   - displaying image data relevant for the image of damaged vehicle and the corresponding type of undamaged vehicle;
   - automatically comparing the three-dimensional image of the damaged vehicle with the corresponding three-dimensional image of the sample vehicle identifying, through an automatic comparison between said two images: damage position or deformation and detecting the distorted regions;
   - selecting, through graphical tools for delimiting or pointing out, the damaged or distorted regions identified from the automatic comparison on at least one of the two images;
   - storing image pixels and respective image data selected as corresponding to the damaged or distorted regions as result of said comparison in a memory of a working program;
   - computing perimeter, area and/or volume from the damaged or distorted region or regions and/or further morphologic parameters through algorithms implemented by a working program, and/or identifying the position in the space of the damage on the vehicle using the computing algorithm implemented by the working program on distorted regions and/or on results of said comparison stored in the memory of working programs;
   - computing a deformation severity degree and assigning said deformation severity degree to every damaged or distorted region;
- computing labor times and costs for repairing the damaged or distorted area, starting from such computed perimeter, area and/or volume and/or morphologic parameters, using a database of available repair times and costs for every type of vehicle; and
- producing a virtual image of the sample vehicle which is composed of the set of virtual images of the single structural parts of the vehicle which form independent structural units, namely single parts of the vehicle, which virtual image is displayed as image of the assembled vehicle or as image of the exploded vehicle, every structural part of the vehicle being univocally identified by an identifying code, and corresponding to the same structural part of the damaged vehicle;

**characterized in that** the step of computing perimeter, area and/or volume from the damaged or distorted region or regions and/or further morphologic parameters, and/or identifying the position in the space of the damage on the vehicle is performed through the following steps:

- acquiring data through laser scanning;
- post-processing the data, comprising the sub-steps of a) aligning the scans and recording, b) cleaning the cloud of points and filtering the noise, c) triangulation and building the mesh, d) closing the holes of the mesh and correcting the anomalous faces, and e) applying the textures to the 3D model;
- displaying the obtained result;
- managing the data in the program used through meshes of polygons;
- showing data in the 3D acquiring program;
- filling as post-processing;
- rebuilding based on meshes with filling of empty spots;
- rebuilding from clouds of points with filling of empty spots;

and **in that** the step of selecting, through graphical tools for delimiting or pointing out, the damaged or distorted regions, comprises the following sub-steps:

- identifying the damaged or distorted regions as specific parts of the vehicle;
- transforming the identified parts of the vehicle into objects to be mutually related in order to build a 3D database also containing a deformation depth value;
- using the 3D database, automatically comparing a damaged or distorted region with a sample region of a same vehicle; and
- using the 3D database, computing intervention times on the damaged or distorted region using a countour of the damaged or distorted area as delimited and identified, and the deformation depth value.

2. - Process according to claim 1, **characterized in that** a comparison is performed between the data of relevant images with the image of the damaged vehicle and the relevant image data with the image of the sample vehicle, the damaged and/or distorted regions being identified by the difference of the image data between the relevant image data for the damaged vehicle and the relevant image data for the sample vehicle.

3. - Process according to claim 1 or 2, **characterized in that** the selection of the image data of the sample vehicle from a database of images of sample vehicles is performed automatically, the image whose image data are different by a minimum amount from the image data of the selected vehicle being selected as image of the sample vehicle.

4. - Process according to any one of the previous claims, **characterized in that** the image data are composed of a three-dimensional array of image data, every element of said array being univocally related to image pixels of a two-dimensional image according to a plane which passes through said pixel and the comparison of image data of the damaged vehicle and of image data of the sample vehicle being built from the comparison of image data which in the two arrays of image data have the same position.

5. - Process according to any one of the previous claims, **characterized in that** the area and/or the volume of the region of image relevant for the image pixels of vehicle coinciding with the damaged region is computed, which region is determined by selection means and/or by automatically comparing the image data of the damaged vehicle with the image data of the sample vehicle.

6. - Process according to claim 1, **characterized in that** at least one external view of the vehicle is defined, preferably various external views of the vehicle taken from its different sides and/or in perspective and at least one internal view of the vehicle, preferably various internal views of the vehicle similarly to the external views, being it possible to graphically select one or more structural parts of the vehicle for their identification as damaged parts or one or more structural parts of the vehicle being identified as damaged parts through an automatic comparison between virtual images of the sample vehicle and virtual images of the damaged vehicle.

7. - System for identifying, analyzing and estimating deformations in particular in motor vehicles according to the process according to any one of the previous claims, **characterized in that** it comprises at least one central processing unit (CPU) or central logic unit with which the following are associated:

- at least one program for performing the steps of the process according to any one of the previous claims,
- at least one memory for storing said program,
- at least one memory for storing image data of at least one vehicle,
- at least one database of three-dimensional images of sample vehicles,
- means for inserting of data or alphanumeric and/or graphic commands,
- selecting means for selecting damaged or distorted regions in said vehicle, and
- at least one unit for printing and/or displaying results such as a monitor.

8. - System according to claim 7, **characterized in that** the graphic means for selecting the pixel and the respective data of images which coincide with the damaged or distorted regions of the vehicles in the displayed images are selected by drawing a closed border line which surrounds the region of vehicle image coinciding with the damaged region and identifying the image data of the subset of pixel which fall within said border line as pixels of the image data corresponding to the damaged or distorted region of the vehicle, said system further comprising a unit for detecting the three-dimensional image of a vehicle, which unit provides a two-dimensional or a three-dimensional set of the image data stored as image data of the damaged vehicle.

## Patentansprüche

1. - Verfahren zur automatischen Erkennung, Analyse und Schätzung von Verformungen an Kraftfahrzeugen, wobei das Verfahren die folgenden Phasen umfasst:

- Laden von Bilddaten, die für mindestens ein dreidimensionales Bild eines beschädigten Fahrzeugs relevant sind, in einen Fahrzeugbildspeicher;
- im Bildspeicher des beschädigten Fahrzeugs die Bilddaten von mindestens einem dreidimensionalen Bild eines Beispielfahrzeugs aus einer Beispielfahrzeugbilddatenbank abrufen, wobei es sich bei dem Beispielfahrzeugbild um das Bild eines Fahrzeugtyps handelt, der dem beschädigten Fahrzeugtyp entspricht;
- Anzeige relevanter Bilddaten für das Bild des beschädigten Fahrzeugs und des entsprechenden unbeschädigten Fahrzeugtyps;
- automatischer Vergleich des dreidimensionalen Bildes des beschädigten Fahrzeugs mit dem entsprechenden dreidimensionalen Bild des Referenzfahrzeugs durch einen automatischen Vergleich der beiden Bilder: Ermittlung der Lage des Schadens oder der Verformung und Erkennung der verformten Bereiche;
- Wählen Sie mithilfe grafischer Abgrenzungs- oder Hervorhebungswerkzeuge die beschädigten oder deformierten Bereiche aus, die beim automatischen Vergleich auf mindestens einem der beiden Bilder identifiziert wurden;
- Speichern der Bildpixel und der zugehörigen Bilddaten, die aufgrund dieses Vergleichs den beschädigten oder deformierten Bereichen zugeordnet sind, im Arbeitsspeicher des Programms;
- Umfang, Fläche und/oder Volumen der beschädigten oder deformierten Bereiche und/oder weitere morphologische Parameter mithilfe von Algorithmen, die in einem Arbeitsprogramm implementiert sind, berechnen und/oder die räumliche Lage des Schadens am Fahrzeug mithilfe des Berechnungsalgorithmus ermitteln, der in dem Arbeitsprogramm für deformierte Bereiche und/oder für die im Arbeitsprogrammspeicher gespeicherten Ergebnisse dieses Vergleichs implementiert ist;
- einen Schweregrad der Verformung berechnen und diesen Schweregrad jeder beschädigten oder verformten Region zuweisen;
- die Zeit- und Arbeitskosten für die Reparatur des beschädigten oder deformierten Bereichs anhand der berechneten Umfangs-, Flächen- und/oder Volumen- und/oder morphologischen Parameter unter Verwendung einer Datenbank mit Reparaturzeiten und -kosten für jeden Fahrzeugtyp zu berechnen; und
- ein virtuelles Bild des Musterfahrzeugs erzeugen, das aus den virtuellen Bildern der einzelnen Strukturteile des Fahrzeugs besteht, die unabhängige Struktureinheiten bilden, d. h. einzelne Teile des Fahrzeugs, wobei dieses virtuelle Bild als Bild des zusammengebauten Fahrzeugs oder als Bild des explodierten Fahrzeugs angezeigt wird, wobei jedes Strukturteil des Fahrzeugs durch einen eindeutigen Identifikationscode identifiziert wird und dem gleichen Strukturteil des beschädigten Fahrzeugs entspricht;

**gekennzeichnet dadurch, dass** die Phase der Berechnung von Umfang, Fläche und/oder Volumen aus dem beschädigten oder deformierten Bereich oder den Bereichen und/oder weiterer morphologischer Parameter und/oder der Bestimmung der Position des Schadens am Fahrzeug im Raum in folgenden Phasen durchgeführt wird:

- Datenerfassung mittels Laserscanning;
- Datennachbearbeitung, einschließlich der Teilphasen a) Scanausrichtung und -registrierung, b) Punktwolkenbereinigung und Rauschfilterung, c) Triangulation und Netzkonstruktion, d) Schließen von Netzlöchern und Korrigieren abnormaler Flächen und e) Anwenden von Texturen auf das 3D-Modell;
- Anzeige des erzielten Ergebnisses;
- Datenverwaltung im verwendeten Programm unter Verwendung von Polygonnetzen;
- Datendarstellung im 3D-Erfassungsprogramm;
- Ausfüllen als Nachbearbeitung;
- netzbasierte Rekonstruktion mit Lückenfüllung; und
- Rekonstruktion aus Punktwolken mit Lückenfüllung;

und aus der Tatsache, dass die Phase der Auswahl der beschädigten oder verzerrten Bereiche mithilfe grafischer Werkzeuge zur Abgrenzung und Hervorhebung die folgenden Unterphasen umfasst:

- beschädigte oder verformte Bereiche als spezifische Teile des Fahrzeugs identifizieren;
- die identifizierten Teile des Fahrzeugs in Objekte umzuwandeln, die miteinander korreliert werden sollen, um eine 3D-Datenbank zu erstellen, die auch einen Deformationstiefenwert enthält;
- mithilfe der 3D-Datenbank einen beschädigten oder verformten Bereich automatisch mit einem Vergleichsbereich desselben Fahrzeugs vergleichen; und
- Berechnen Sie mithilfe der 3D-Datenbank die Interventionszeiten für die beschädigte oder verformte Region anhand der Umrisse des abgegrenzten und identifizierten beschädigten oder verformten Bereichs sowie des Wertes der Verformungstiefe.

**2.** - Verfahren nach Anspruch 1, **dadurch gekennzeichnet, dass** ein Vergleich zwischen den Bilddaten des beschädigten Fahrzeugs und den Bilddaten des Vergleichsfahrzeugs durchgeführt wird, wobei die beschädigten und/oder deformierten Bereiche durch die Differenz zwischen den Bilddaten des beschädigten Fahrzeugs und den Bilddaten des Vergleichsfahrzeugs identifiziert werden.

**3.** - Verfahren nach Anspruch 1 oder 2, **dadurch gekennzeichnet, dass** die Auswahl der Bilddaten des Musterfahrzeugs aus einer Datenbank von Bildern von Musterfahrzeugen automatisch erfolgt, wobei das Bild, dessen Bilddaten sich nur minimal von den Bilddaten des ausgewählten Fahrzeugs unterscheiden, als Bild des Musterfahrzeugs ausgewählt wird.

**4.** - Verfahren nach einem oder mehreren der Ansprüche 1 bis 3, **dadurch gekennzeichnet, dass** die Bilddaten aus einem dreidimensionalen Array von Bilddaten bestehen, wobei jedes Element dieses Arrays eindeutig einem Bildpixel eines zweidimensionalen Bildes gemäß einer durch dieses Pixel verlaufenden Ebene zugeordnet ist und der Vergleich der Bilddaten des beschädigten Fahrzeugs und der Bilddaten des Vergleichsfahrzeugs durch den Vergleich der Bilddaten erfolgt, die in den beiden Arrays von Bilddaten die gleiche Position haben.

**5.** - Verfahren nach einem oder mehreren der Ansprüche 1 bis 4, **dadurch gekennzeichnet, dass** die Fläche und/oder das Volumen des Bildbereichs, der dem mit dem beschädigten Bereich übereinstimmenden Fahrzeugbildpixel entspricht, berechnet wird, wobei dieser Bereich durch Auswahlmittel und/oder durch automatischen Vergleich der Bilddaten des beschädigten Fahrzeugs mit den Bilddaten des Referenzfahrzeugs bestimmt wird.

**6.** - Verfahren nach Anspruch 1, **dadurch gekennzeichnet, dass** mindestens eine Außenansicht des Fahrzeugs, vorzugsweise mehrere Außenansichten des Fahrzeugs von verschiedenen Seiten und/oder in Perspektive, und mindestens eine Innenansicht des Fahrzeugs, vorzugsweise mehrere Innenansichten des Fahrzeugs, die den Außenansichten ähnlich sind, definiert sind, wobei es möglich ist, ein oder mehrere Strukturteile des Fahrzeugs grafisch auszuwählen, um sie als beschädigte Teile zu identifizieren, oder dass ein oder mehrere Strukturteile des Fahrzeugs durch automatischen Vergleich zwischen virtuellen Bildern des Musterfahrzeugs und virtuellen Bildern des beschädigten Fahrzeugs als beschädigte Teile identifiziert werden.

7. - System zur Identifizierung, Analyse und Abschätzung von Verformungen, insbesondere an Kraftfahrzeugen, nach dem Verfahren nach einem der vorhergehenden Ansprüche, **dadurch gekennzeichnet, dass** es mindestens eine zentrale Verarbeitungseinheit (CPU) oder eine zentrale Logikeinheit umfasst, mit der Folgendes verbunden ist:

- mindestens ein Programm zur Durchführung der Verfahrensschritte gemäß einem der vorhergehenden Ansprüche,
- mindestens ein Speicher zum Speichern des besagten Programms,
- mindestens ein Speicher zur Speicherung von Bilddaten von mindestens einem Fahrzeug,
- mindestens eine Datenbank mit dreidimensionalen Bildern von Beispielfahrzeugen,
- Mittel zur Eingabe alphanumerischer und/oder grafischer Daten oder Befehle,
- Mittel zur Auswahl beschädigter oder deformierter Bereiche an dem Fahrzeug, und
- mindestens eine Einheit zum Drucken und/oder Anzeigen von Ergebnissen, z. B. ein Monitor.

8. - Ein System nach Anspruch 7, **dadurch gekennzeichnet, dass** die grafischen Mittel zur Auswahl von Pixeln und deren Bilddaten, die mit beschädigten oder deformierten Bereichen von Fahrzeugen in den angezeigten Bildern übereinstimmen, durch Zeichnen einer geschlossenen Begrenzungslinie um den mit dem beschädigten Bereich übereinstimmenden Fahrzeugbildbereich und Identifizierung der Bilddaten der Teilmenge der Pixel, die innerhalb dieser Begrenzungslinie liegen, als Bilddatenpixel, die dem beschädigten oder deformierten Bereich des Fahrzeugs entsprechen, ausgewählt werden, wobei das System ferner eine Einheit zur Erfassung des dreidimensionalen Bildes eines Fahrzeugs umfasst, wobei diese Einheit einen zweidimensionalen oder dreidimensionalen Satz der als Bilddaten des beschädigten Fahrzeugs gespeicherten Bilddaten bereitstellt.

**Revendications**

1. - Procédé d'identification, d'analyse et d'estimation automatiques des déformations des véhicules automobiles, ledit procédé comprenant les phases suivantes:

- chargement des données d'image pertinentes pour au moins une image tridimensionnelle d'un véhicule endommagé dans une mémoire d'image du véhicule;
- dans la mémoire d'images de véhicules endommagés, rappeler les données d'image d'au moins une image tridimensionnelle d'un véhicule échantillon à partir d'une base de données d'images de véhicules échantillons, ladite image de véhicule échantillon étant l'image d'un type de véhicule correspondant au type de véhicule endommagé;
- afficher les données d'image pertinentes pour l'image du véhicule endommagé et le type de véhicule non endommagé correspondant;
- comparer automatiquement l'image tridimensionnelle du véhicule endommagé avec l'image tridimensionnelle correspondante du véhicule de référence en identifiant, par une comparaison automatique entre les deux images: l'emplacement du dommage ou de la déformation et en détectant les régions déformées;
- sélectionner à l'aide d'outils de délimitation ou de mise en évidence graphique les régions endommagées ou déformées identifiées par la comparaison automatique sur au moins une des deux images;
- stockage des pixels de l'image et des données d'image respectives sélectionnées comme correspondant aux régions endommagées ou déformées à la suite de ladite comparaison dans une mémoire de programme de travail;
- calculer le périmètre, la surface et/ou le volume de la ou des régions endommagées ou déformées et/ou d'autres paramètres morphologiques à l'aide d'algorithmes mis en œuvre par un programme de travail, et/ou identifier l'emplacement spatial du dommage sur le véhicule à l'aide de l'algorithme de calcul mis en œuvre par le programme de travail sur les régions déformées et/ou sur les résultats de ladite comparaison stockés dans la mémoire du programme de travail;
- calculer un degré de gravité de la déformation et attribuer ce degré de gravité de la déformation à chaque région endommagée ou déformée;
- calculer le temps et les coûts de main-d'œuvre nécessaires à la réparation de la zone endommagée ou déformée, à partir du périmètre, de la surface et/ou du volume et/ou des paramètres morphologiques calculés, en utilisant une base de données des temps et coûts de réparation disponibles pour chaque type de véhicule;
- produire une image virtuelle du véhicule échantillon qui consiste en l'ensemble des images virtuelles des pièces structurelles individuelles du véhicule formant des unités structurelles indépendantes, c'est-à-dire des pièces individuelles du véhicule, dont l'image virtuelle est affichée comme une image du véhicule assemblé ou comme une image du véhicule explosé, chaque pièce structurelle du véhicule étant identifiée de manière unique par un code d'identification et correspondant à la même pièce structurelle du véhicule endommagé;

**caractérisée en ce que** la phase de calcul du périmètre, de la surface et/ou du volume de la ou des régions endommagées ou déformées et/ou d'autres paramètres morphologiques, et/ou d'identification de la position spatiale du dommage sur le véhicule est réalisée à travers les phases suivantes:

- acquisition de données par balayage laser;
- post-traitement des données, y compris les sous-phases suivantes: a) alignement et enregistrement du scan, b) nettoyage du nuage de points et filtrage du bruit, c) triangulation et construction du maillage, d) fermeture des trous du maillage et correction des faces anormales, et e) application de textures au modèle 3D;
- affichage du résultat obtenu;
- Gestion des données dans le programme utilisant des maillages polygonaux;
- représentation des données dans le programme d'acquisition 3D;
- remplissage en tant que post-traitement;
- reconstruction par maillage avec remplissage des lacunes; et
- reconstruction à partir de nuages de points avec remplissage des lacunes;

et du fait que la phase de sélection, au moyen d'outils graphiques de délimitation et de mise en évidence, des régions endommagées ou déformées, comprend les sous-phases suivantes:

- identifier les zones endommagées ou déformées comme des parties spécifiques du véhicule;
- transformer les parties identifiées du véhicule en objets à corréler entre eux afin de construire une base de données 3D contenant également une valeur de profondeur de déformation;
- à l'aide de la base de données 3D, comparer automatiquement une zone endommagée ou déformée avec une zone témoin du même véhicule; et
- à l'aide de la base de données 3D, calculer les temps d'intervention sur la région endommagée ou déformée en utilisant un contour de la zone endommagée ou déformée délimitée et identifiée, et la valeur de profondeur de déformation.

2. - Procédé selon la revendication 1, **caractérisé en ce qu'**une comparaison est effectuée entre les données d'image relatives à l'image du véhicule endommagé et les données d'image relatives à l'image du véhicule échantillon, les régions endommagées et/ou déformées étant identifiées par la différence dans les données d'image entre les données d'image relatives au véhicule endommagé et les données d'image relatives au véhicule échantillon.

3. - Procédé selon la revendication 1 ou 2, **caractérisé en ce que** la sélection des données d'image du véhicule échantillon à partir d'une base de données d'images de véhicules échantillons est effectuée automatiquement, l'image dont les données d'image diffèrent d'une quantité minimale des données d'image du véhicule sélectionné étant sélectionnée comme image du véhicule échantillon.

4. - Procédé selon une ou plusieurs des revendications 1 à 3 ci-dessus, **caractérisé en ce que** les données d'image sont composées d'un tableau tridimensionnel de données d'image, chaque élément dudit tableau étant lié de manière unique à un pixel d'image d'une image bidimensionnelle selon un plan passant par ledit pixel et la comparaison des données d'image du véhicule endommagé et des données d'image du véhicule échantillon étant constituée par la comparaison des données d'image qui, dans les deux tableaux de données d'image, ont la même position.

5. - Procédé selon une ou plusieurs des revendications 1 à 4 ci-dessus, **caractérisé en ce que** la surface et/ou le volume de la région d'image pertinente pour le pixel d'image du véhicule coïncidant avec la région endommagée sont calculés, cette région étant déterminée par des moyens de sélection et/ou par comparaison automatique des données d'image du véhicule endommagé avec les données d'image du véhicule échantillon.

6. - Procédé selon la revendication 1, **caractérisé en ce qu'**au moins une vue extérieure du véhicule est définie, de préférence plusieurs vues extérieures du véhicule prises de ses différents côtés et/ou en perspective, et au moins une vue intérieure du véhicule, de préférence plusieurs vues intérieures du véhicule similaires aux vues extérieures, étant possible de sélectionner graphiquement une ou plusieurs pièces structurelles du véhicule pour leur identification comme pièces endommagées ou une ou plusieurs pièces structurelles du véhicule étant identifiées comme pièces endommagées par comparaison automatique entre des images virtuelles du véhicule échantillon et des images virtuelles du véhicule endommagé.

7. - Système d'identification, d'analyse et d'estimation des déformations, notamment des véhicules automobiles, selon le procédé selon l'une quelconque des revendications précédentes, **caractérisé en ce qu'**il comprend au moins une unité centrale de traitement (CPU) ou une unité logique centrale à laquelle sont associés les éléments suivants:

- au moins un programme permettant d'exécuter les étapes d'un processus selon l'une quelconque des revendications précédentes,
- au moins une mémoire pour stocker ledit programme,
- au moins une mémoire pour stocker les données d'image d'au moins un véhicule,
- au moins une base de données d'images tridimensionnelles de véhicules types,
- moyens de saisie de données ou de commandes alphanumériques et/ou graphiques,
- moyens de sélectionner les régions endommagées ou déformées dudit véhicule, et
- au moins un appareil pour imprimer et/ou afficher les résultats, tel qu'un moniteur.

8. - Un système selon la revendication 7, **caractérisé en ce que** les moyens graphiques de sélection des pixels et de leurs données d'image qui coïncident avec les régions endommagées ou déformées des véhicules dans les images affichées sont sélectionnés en traçant une ligne de contour fermée entourant la région de l'image du véhicule coïncidant avec la région endommagée et en identifiant les données d'image du sous-ensemble de pixels tombant à l'intérieur de ladite ligne de contour comme pixels de données d'image correspondant à la région endommagée ou déformée du véhicule, ledit système comprenant en outre une unité de détection de l'image tridimensionnelle d'un véhicule, cette unité fournissant un ensemble bidimensionnel ou tridimensionnel des données d'image stockées comme données d'image du véhicule endommagé.

Fig.1

FIG. 2

$$s1 = \text{Sign } (a,b,c) * \text{Sign } (a,b,P_A)$$
$$s2 = \text{Sign } (b,c,a) * \text{Sign } (b,c,P_A)$$
$$s3 = \text{Sign } (c,a,b) * \text{Sign } (c,a,P_A)$$

Coordinates of vertexes a,b,c and of point $P_A$

$s1 < 0$ or $s2 < 0$ or $s3 < 0$

Yes

$P_A$ Is external

No

$s1 > 0$ and $s2 > 0$ and $s3 > 0$

Yes

No

$P_A$ Is internal

$P_A$ Is on the side

Returns the position of $P_A$ to the main function

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1204060 A
- JP 06259439 A
- JP 09081739 A
- US 20120676437 A1